Europäisches Patentamt

European Patent Office

Office européen des brevets

(19)

(11) Numéro de publication : **0 024 235**
**B1**

(12)

# FASCICULE DE BREVET EUROPÉEN

(45) Date de publication du fascicule du brevet :
**18.01.84**

(51) Int. Cl.³ : **G 02 B   7/26**

(21) Numéro de dépôt : **80401157.5**

(22) Date de dépôt : **06.08.80**

(54) **Connecteur pour fibres optiques.**

(30) Priorité : **10.08.79 FR 7920523**

(43) Date de publication de la demande :
**25.02.81 Bulletin 81/08**

(45) Mention de la délivrance du brevet :
**18.01.84 Bulletin 84/03**

(84) Etats contractants désignés :
**DE GB IT**

(56) Documents cités :
**DE-A- 2 602 661**
**FR-A- 2 386 061**
**JP-A-53 066 244**

(73) Titulaire : **THOMSON-CSF**
**173, Boulevard Haussmann**
**F-75379 Paris Cedex 08 (FR)**

(72) Inventeur : **Dubos, Jacques**
**"THOMSON-CSF" SCPI 173, Bld Haussmann**
**F-75360 Paris Cedex 08 (FR)**
Inventeur : **Faure, Michel**
**"THOMSON-CSF" SCPI 173, Bld Haussmann**
**F-75360 Paris Cedex 08 (FR)**
Inventeur : **Bourbin, Yannick**
**"THOMSON-CSF" SCPI 173, Bld Haussmann**
**F-75360 Paris Cedex 08 (FR)**
Inventeur : **Jouanin, André**
**"THOMSON-CSF" SCPI 173, Bld Haussmann**
**F-75360 Paris Cedex 08 (FR)**
Inventeur : **Regeffe, Jean-Yves**
**"THOMSON-CSF" SCPI 173, Bld Haussmann**
**F-75360 Paris Cedex 08 (FR)**
Inventeur : **Lumineau, Yves**
**"THOMSON-CSF" SCPI 173, Bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Connecteur pour fibres optiques

L'invention se rapporte aux systèmes de connexion de fibres optiques et concerne plus particulièrement un connecteur autocentrant permettant un épissurage bout à bout d'au moins une paire de fibres optiques.

L'utilisation des fibres optiques nécessite des moyens de connexion assurant une bonne continuité optique dans les fibres connectées.

Les fibres servant de guide aux rayonnements optiques sont constituées par deux milieux réfringents coaxiaux formés d'une partie centrale (ou âme) de section circulaire, à haut indice de réfraction, et d'une partie annulaire coaxiale (ou gaine) d'indice moins élevé. La variation radiale d'indice est déterminée de façon à réfléchir totalement le rayonnement au niveau de la gaine de façon à propager ce rayonnement dans la partie centrale de la fibre optique.

Ces fibres optiques sont de très petites dimensions, la partie centrale ou âme de la fibre ayant, suivant les cas de propagation, des diamètres compris entre quelques microns et quelques centaines de microns. La connexion bout à bout de deux de ces fibres nécessite donc une très grande précision de montage.

Il est connu d'utiliser des embouts multi-fibres à rangement hexagonal, ces embouts étant munis d'un système de détrompage. Il est également connu de maintenir en position convenable une fibre optique au moyen de trois tiges rigides insérées dans un manchon rétractable et muni de moyens de pincement mécaniques. Mais cette solution conduit à un positionnement imprécis de la fibre par rapport à l'axe du système de connexion.

On connaît du document FR-A-2 386 061 un connecteur de fibres comportant trois tiges comprimées radialement par un double cône métallique.

On connaît de la demande de brevet allemand DE-OS-2 602 661 un connecteur auto-centrant à trois tiges, dans lequel le serrage des tiges est obtenu par déformation élastique de joints lors du vissage de deux bouchons enfilés à chaque extrémité des tiges.

Ce dispositif ne permet qu'un serrage ponctuel des tiges, et les tiges ne sont pas serrées les unes contre les autres à l'endroit où les fibres sont aboutées.

Ce dispositif demande, en outre pour sa réalisation, plusieurs pièces mécaniques qui en grèvent le coût.

La présente invention a pour objet un dispositif ne présentant pas ces inconvénients. Ce dispositif est défini dans la revendication 1.

L'invention sera mieux comprise et d'autres aspects apparaîtront à l'aide de la description ci-après et des dessins qui l'accompagnent et sur lesquels :

la figure 1 représente, en coupe longitudinale, un connecteur de fibres optiques suivant l'invention ;

les figures 2 à 5 montrent des détails de réalisation du connecteur suivant l'invention ;

la figure 6 montre un détail d'un autre exemple de réalisation d'un connecteur de fibres optiques suivant l'invention ;

la figure 7 montre, en coupe, un coffret dans lequel sont disposés plusieurs connecteurs suivant l'invention.

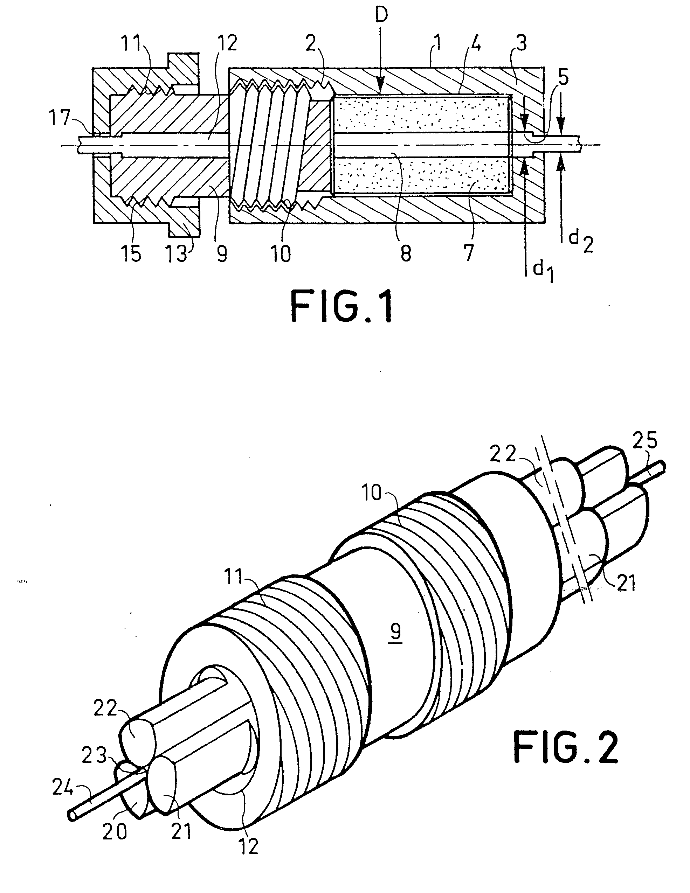

Dans un exemple de réalisation, le connecteur suivant l'invention comporte, comme montré en figures 1 et 2 :

— trois tiges 20, 21, 22 métalliques identiques (figure 2), de forme cylindrique délimitant, lorsqu'elles sont accolées suivant une de leurs génératrices un espace 23 inter-tiges dans lequel peuvent être glissées des fibres optiques 24, 25. Le diamètre de ces fibres optiques 24, 25 est sensiblement égal au diamètre du cercle inscrit dans l'espace 23 inter-tiges ;

— un fourreau 1 cylindrique (figure 1), en matériau métallique par exemple, ce fourreau 1 étant fermé à l'une de ses extrémités par une paroi 3 munie d'un orifice 5 axial de diamètre $d_1$, ce fourreau comportant à son autre extrémité un filetage 2 intérieur ;

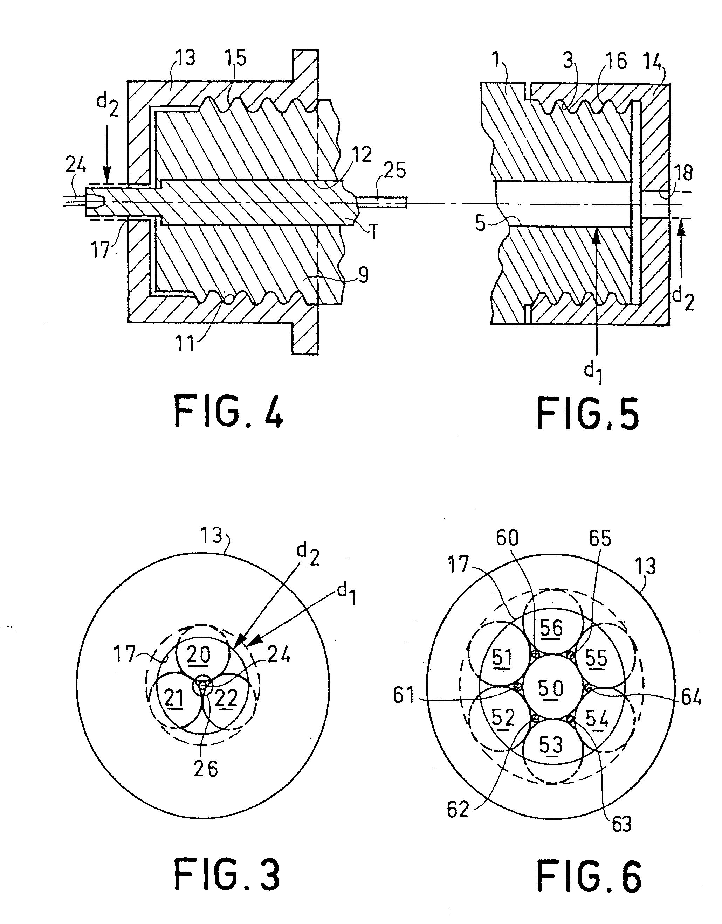

— un manchon 7 cylindrique, en matériau élastique et incompressible, c'est-à-dire déformable mais de volume sensiblement constant, muni axialement d'un canal 8 de diamètre $d_1$, ce diamètre $d_1$ étant sensiblement égal au diamètre du cercle circonscrit à l'ensemble des tiges 20, 21, 22 accolées (figure 3), et le diamètre extérieur du manchon 7 étant un peu inférieur au diamètre intérieur du fourreau 1 dans lequel il est destiné à être placé ;

— un bouchon 9 de serrage (figures 1 et 2) en matériau métallique par exemple, muni axialement d'un canal 12, de diamètre $d_1$, ce bouchon 9, qui comporte à l'une de ses extrémités un filetage 10 extérieur, étant destiné à venir se visser dans le filetage 2 intérieur du fourreau 1.

L'opération de connexion des fibres optiques 24, 25 s'effectue de la façon suivante :

— les trois tiges 20, 21, 22 accolées sont introduites dans le manchon 7 élastique, lui-même placé dans le fourreau 1, ces trois tiges 20, 21, 22 délimitant un espace 23 inter-tiges dans lequel sont glissées les fibres 24 et 25 à connecter. Lorsque ces fibres optiques 24, 25 sont au contact l'une de l'autre, le bouchon 9, dont le canal 12 est traversé par l'ensemble des tiges 20, 21, 22 accolées, est vissé dans le fourreau 1 de façon à venir comprimer longitudinalement le manchon 7 élastique qui comprime à son tour radialement les trois tiges 20, 21, 22 sur les fibres optiques 24, 25 qui sont alors immobilisées.

Dans un autre exemple de réalisation, l'assemblage des trois tiges 20, 21, 22 présente à ses extrémités, sur une longueur déterminée, un décolletage de diamètre $d_2$ inférieur à $d_1$ (figure 3). L'orifice axial 5 du fourreau 1 peut alors présenter deux portions ayant respectivement des diamètres $d_1$ et $d_2$ (figure 1). Dans un autre exemple de réalisation, le connecteur peut être muni à ses extrémités de deux capots 13 et 14 cylindriques (figures 4 et 5) comportant respectivement des orifices axiaux 17 et 18 de diamètre sensiblement égal à $d_2$. Ces capots 13 et 14 viennent se visser à chaque extrémité du connecteur, les parties décolletées des tiges accolées 20, 21, 22 s'engageant dans les orifices axiaux 17 et 18 respectivement, ces capots 17 et 18 assurant le positionnement convenable de l'ensemble des tiges 20, 21, 22 dans le manchon 7 et empêchant la rotation de ces trois tiges 20, 21, 22 autour de leur axe.

Afin de faciliter l'introduction des fibres optiques dans l'espace inter-tiges 23, cet espace 23 inter-tiges peut comporter, comme le montre la figure 3, un évasement axial (un alésage conique 26 par exemple).

Dans un autre exemple de réalisation d'un connecteur suivant l'invention, montré en figure 6, ce connecteur comporte sept tiges 50 à 56, les six tiges 51 à 56 étant arrangées autour de la tige centrale 50. L'ensemble des sept tiges 50 à 56 accolées délimitent six espaces inter-tiges dans lesquels peuvent être glissées et connectées six paires de fibres optiques 60 à 65. Chacun des espaces inter-tiges peut être muni à son extrémité d'un évasement axial et l'ensemble des tiges 50 à 56 accolées peut être décolleté à chaque extrémité, les parties décolletées venant s'insérer dans les orifices axiaux des capots 17 et 18 de diamètre sensiblement égal au diamètre du décolletage de l'ensemble des tiges 50 à 56.

Dans les exemples décrits et représentés, les tiges 20, 21, 22 ou les tiges 50 à 56 peuvent être en matériau ferromagnétique et aimantées de telle sorte qu'elles se repoussent mutuellement afin de faciliter l'insertion des paires de fibres optiques dans les espaces inter-tiges correspondants.

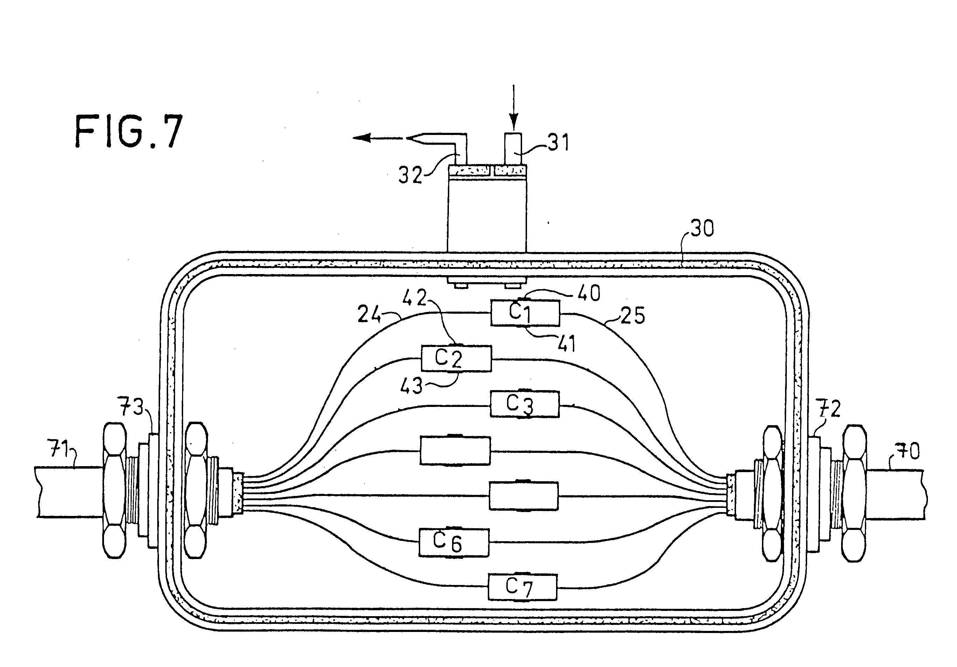

La figure 7 montre un coffret destiné à recevoir plusieurs connecteurs suivant l'invention. Ces connecteurs $C_1$, $C_2$, $C_3$ ... sont maintenus par des paires de clips 40, 41 ; 42, 43 ; ... les câbles 70 et 71 de fibres optiques pénètrent dans le coffret 30 par des passages étanches 72 et 73. Le coffret 30, qui est étanche, est muni sur l'une de ses faces d'une tubulure 31 de remplissage et d'une tubulure 32 de dégazage, ces tubulures 31, 32 permettant d'introduire dans le coffret 30, un liquide d'indice déterminé. Un vide primaire est effectué dans le coffret 30 en utilisant la tubulure 32, avant l'introduction par la tubulure 31 d'un liquide d'indice de réfraction déterminé. Ce liquide peut alors remplir le coffret 30 et pénétrer dans les connecteurs $C_1$, $C_2$, $C_3$, ...

**Revendications**

1. Connecteur auto-centrant destiné à l'aboutement d'au moins une paire de fibres optiques de même diamètre et comportant un assemblage de 2n + 1 tiges cylindriques de même diamètre, n pouvant être égal à 1 ou à 3, chaque tige étant en contact avec les tiges voisines, au moins 2n tiges ayant une génératrice en contact avec un cercle circonscrit à l'assemblage, cet assemblage délimitant un espace inter-tiges dans lequel les deux fibres optiques peuvent être aboutées et des moyens de serrage permettant de réaliser l'alignement et le pincement des deux fibres optiques, ces moyens de serrage comprenant des moyens élastiques entourant les tiges, un fourreau cylindrique et un bouchon cylindrique percé d'un orifice permettant le passage d'une première extrémité des tiges et coopérant par vissage avec une première extrémité du fourreau, caractérisé en ce que la seconde extrémité du fourreau (1) comporte une paroi (3) formant butée pour les moyens élastiques et percée d'un orifice axial (5) permettant le passage de la seconde extrémité de l'assemblage des tiges (20, 21, 22) et en ce que les moyens élastiques entourant l'assemblage des tiges (20 à 22) consistent en un manchon cylindrique (7) en matériau élastique et incompressible disposé dans le fourreau cylindrique (1) et dont le diamètre extérieur est légèrement inférieur au diamètre intérieur (4) du fourreau cylindrique (1), de telle sorte que le vissage du bouchon (9) sur le fourreau (1) produit une compression radiale uniforme de l'assemblage des tiges (20 à 22) sur toute la longueur du manchon élastique (7).

2. Connecteur selon la revendication 1, caractérisé en ce que l'assemblage des tiges présente à chacune de ses extrémités, sur une longueur déterminée, un décolletage de côte $d_2$ inférieur au diamètre de l'assemblage, en ce que l'orifice axial (5) de la paroi (3) située à la seconde extrémité du fourreau (1) ainsi que l'orifice du bouchon cylindrique (9) présentent une portion intérieure de diamètre $d_1$ supérieur au diamètre de l'assemblage et une portion extérieure de diamètre $d_2$.

3. Connecteur selon la revendication 2, caractérisé en ce que le bouchon cylindrique (9) est muni d'un capot (13) percé d'un orifice (17) de diamètre $d_2$ enfilé sur la portion décolletée de l'assemblage des tiges.

4. Connecteur selon l'une des revendications 2 ou 3, caractérisé en ce que la portion extérieure de diamètre $d_2$ de la seconde extrémité du fourreau (1) est constituée par l'orifice axial (18) d'un second capot (14) venant se visser sur un filetage extérieur (16) du fourreau.

5. Connecteur selon l'une des revendications précédentes, caractérisé en ce que chaque espace inter-tiges présente à ses extrémités un évasement axial.

6. Connecteur selon l'une des revendications précédentes, caractérisé en ce que les tiges sont aimantées de telle façon qu'elles se repoussent mutuellement.

7. Utilisation d'une pluralité de connecteur selon l'une des revendications précédentes dans un dispositif de connexion de fibres optiques comprenant un coffret étanche, caractérisé en ce que celui-ci est muni de paires de clips (40, 41 ; 42, 43) entre lesquels sont insérés les connecteurs ($C_1$, $C_2$, $C_3$, ...), ceux-ci étant noyés dans un liquide d'indice de réfraction de valeur déterminée.

## Claims

1. Self-centring connector for end to end connection of at least one optical fiber pair of identical diameters and comprising an assembly of $2n + 1$ cylindrical rods of identical diameters, n being equal to 1 or to 3, each rod contacting the adjacent rods, at least 2n rods having a generatrix contacting a circule circumscribing the assembly, said assembly defining an inter-rod space within which the two optical fibers may be joined end to end, and clamping means allowing to align and to clamp the two optical fibers, these clamping means comprising resilient means surrounding the rods, a cylindrical sheath and a cylindrical plug pierced by an opening allowing the passage of a first end of the rods and cooperating by screwing with a first end of the sheath, characterized in that the second end of the sheath (1) comprises a wall (3) forming an abutment for the resilient means and pierced by an axial opening (5) allowing the passage of the second end of the assembly of rods (20, 21, 22) and in that the resilient means surrounding the assembly of rods (20 to 22) consist in a cylindrical sleeve (7) of a resilient incompressible material located inside the cylindrical sheath (1) and the outer diameter of which is slightly smaller than the inner diameter (4) of the cylindrical sheath (1), so that the screwing of the plug (9) onto the sheath (1) causes a radial uniform compression of the assembly of rods (20 to 22) across the total length of the resilient sleeve (7).

2. Connector according to claim 1, characterized in that the assembly of rods has, on each of its ends and across a determined length, a stepped turning having a dimension $d_2$ which is smaller than the diameter of the assembly, in that the axial opening (5) of the wall (3) located on the second end of the sheath (1) as well as the opening of the cylindrical plug (9) have an inner portion of a diameter $d_1$ exceeding the diameter of the assembly and an outer portion having the diameter $d_2$.

3. Connector according to claim 2, characterized in that the cylindrical plug (9) is provided with a cap (13) pierced by an opening (17) of the diameter $d_2$ and threaded onto the stepped portion of the assembly of rods.

4. Connector according to claims 2 or 3, characterized in that the outer portion of the diameter $d_2$ of the second end of the sheath (1) is composed of the axial opening (18) of a second cap (14) screwed onto an outer thread (16) of the sheath.

5. Connector according to any of the preceding claims, characterized in that each inter-rod space has an axial widening on its ends.

6. Connector according to any of the preceding claims, characterized in that the rods are magnetized in such a manner that they repell each other.

7. Use of a plurality of connectors according to any of the preceding claims in a device for connecting optical fibers comprising a sealed box, characterized in that the latter is provided with pairs of clips (40, 41 ; 42, 43) between which connectors ($C_1$, $C_2$, $C_3$,...) are inserted, the latter being immersed into a liquid having a refraction index of a determined value.

## Ansprüche

1. Selbstzentrierender Verbinder zum Aneinanderfügen von wenigstens einem Paar optischer Fasern desselben Durchmessers, mit einem Gefüge von $2n + 1$ zylindrischen Stäben desselben Durchmessers, worin n gleich 1 oder 3 sein kann und jeder Stab in Berührung mit den benachbarten Stäben ist, wobei wenigstens 2n Stäbe eine Mantellinie aufweisen, die in Berührung mit einem das Gefüge umschreibenden Kreis ist, wobei dieses Gefüge ferner einen Raum zwischen den Stäben begrenzt, in welchem die beiden optischen Fasern aneindergefügt werden können, und mit Spannmitteln, die es ermöglichen, die Ausrichtung und das Einspannen von zwei optischen Fasern zu verwirklichen, wobei diese Spannmittel elastische, die Stäbe umgebende Mittel, eine zylindrische Hülle und einen zylindrischen Stopfen umfassen, der eine Öffnung für den Durchgang eines ersten Endes der Stäbe aufweist und durch Verschraubung mit einem ersten Ende der Hülle zusammenwirkt, dadurch gekennzeichnet, daß das zweite Ende der Hülle (1) eine Wandung (3) umfaßt, die einen Anschlag für die elastischen Mittel bildet und eine axiale Öffnung (5) aufweist, welche den Durchgang des zweiten Endes des Gefüges von Stäben (20, 21, 22) ermöglicht, und daß die elastischen Mittel, welche das Gefüge von Stäben (20 bis 22) umgeben, aus einer zylindrischen Hülse (7) aus elastischem, inkompressiblem Material bestehen, die in der zylindrischen Hülle (1) angeordnet ist und deren Außendurchmesser etwas kleiner als der Innendurchmesser (4) der zylindrischen Hülle (1) ist, so daß durch Verschraubung des Stopfens (9) mit der Hülle (1) ein gleichmäßiges radiales Zusammendrücken des Gefüges von Stäben (20 bis 22) über die gesamte Länge der elastischen Hülse (7) erfolgt.

2. Verbinder nach Anspruch 1, dadurch gekennzeichnet, daß das Gefüge von Stangen an jedem seiner Enden und über eine bestimmte Länge eine stufenförmige Verjüngung aufweist, die das Maß $d_2$ aufweist, welches kleiner als der Durchmesser des Gefüges ist, daß die axiale Öffnung (5) der Wandung (3) am zweiten Ende der Hülle (1) sowie die Öffnung des zylindrischen Stopfens (9) einen inneren Teil mit dem Durchmesser $d_1$ aufweisen, der größer als der Durchmesser des Gefüges ist, und einen äußeren Teil mit dem Durchmesser $d_2$ aufweisen.

3. Verbinder nach Anspruch 2, dadurch gekennzeichnet, daß der zylindrische Stopfen (9) mit einer Haube (13) versehen ist, welche eine Öffnung (17) mit dem Durchmesser $d_2$ aufweist und auf den verjüngten Teil des Gefüges von Stäben aufgeschoben ist.

4. Verbinder nach Anspruch 2 oder 3, dadurch gekennzeichnet, daß der äußere Teil mit Durchmesser $d_2$ am zweiten Ende der Hülle (1) durch die axiale Öffnung (18) einer zweiten Haube (14) gebildet ist, die auf ein Außengewinde (16) der Hülle aufschraubbar ist.

5. Verbinder nach einem der vorstehenden Ansprüche, dadurch gekennzeichnet, daß jeder Raum zwischen den Stäben an seinen Enden eine axiale Erweiterung aufweist.

6. Verbinder nach einem der vorstehenden Ansprüche, dadurch gekennzeichnet, daß die Stäbe derart magnetisiert sind, daß sie sich gegenseitig abstoßen.

7. Verwendung einer Mehrzahl von Verbindern nach einem der vorstehenden Ansprüche in einer Vorrichtung zur Verbindung von optischen Fasern, welche ein dichtes Gehäuse umfaßt, dadurch gekennzeichnet, daß dieses mit Paaren von Klammern (40, 41 ; 42, 43) versehen ist, zwischen die die Verbinder ($C_1$, $C_2$, $C_3$, ...) eingefügt sind, welche in eine Flüssigkeit mit einem Brechungsindex gegebenen Wertes eingetaucht sind.

FIG.1

FIG.2

FIG. 4

FIG. 5

FIG. 3

FIG. 6

FIG.7